# EUROPÄISCHE PATENTANMELDUNG

(11) **EP 0 690 179 A1**
(43) Veröffentlichungstag der Anmeldung: **03.01.1996**
(21) Anmeldenummer: 95810383.0
(22) Anmeldetag: 09.06.1995
(51) Int. Cl.: E03F 5/10, E03F 5/14, B01D 17/02

(54) **Schwimmende Tauchwand**

(30) Priorität: 28.06.1994 CH 2051/94
(71) Anmelder: Nill, Werner, CH-8400 Winterthur (CH)
(72) Erfinder: Nill, Werner, CH-8400 Winterthur (CH)
(74) Vertreter: Gachnang, Hans Rudolf

(57) **Zusammenfassung**

Die schwimmende Tauchwand (15) besteht aus einem Schwimmkörper (14), der in die Flüssigkeitsoberfläche eintaucht, wenn das Niveau des Flüssigkeitsspiegels die unten liegende Kante der Tauchwand (15) erreicht bzw. passiert hat. Im eintauchenden Bereich des Schwimmkörpers (14) sind eine oder mehrere Öffnungen (24) angebracht. Mit steigendem Wasserspiegel hebt sich die Tauchwand (15), wobei stets ein Teil derselben in den Flüssigkeitsspiegel eingetaucht ist und auf dem Wasser aufschwimmende feste oder flüssige Verunreinigungen (17) oder andere aufschwimmende Produkte zurückhält. Die Tauchwand (15) ist sehr kostengünstig herstellbar und funktionssicher. Die Tauchwand (15) kann auch, wenn deren Querschnitt entsprechend ausgebildet ist und wenn sie um eine Achse schwenkbar ist, Verunreinigungen oder Festkörper zurückhalten, sogar wenn es zu einem Notüberlauf kommt.

## Beschreibung

Gegenstand der vorliegenden Erfindung ist eine schwimmende Tauchwand gemäss Oberbegriff des Patentanspruches 1.

Schwimmende Tauchwände werden u.a. in Regenüberlauf- und Klärbecken sowie bei Regenentlastungen eingesetzt und dienen dort dazu, auf dem zufliessenden Wasser aufschwimmende Festkörper zurückzuhalten, d.h. zu verhindern, dass diese während der Entlastung in ein fliessendes oder stehendes Gewässer entweichen können. Schwimmende Tauchwände, wie sie beispielsweise aus der Schweizer Patentschrift 634371 bekannt sind, bestehen aus einem sich über die Länge einer Überfallwand erstreckenden Hohlkörper aus Metall oder aus Kunststoff. Der Hohlkörper ist entweder an Armen schwenkbar mit dem Bauwerk verbunden und kann aus einer abgesenkten Stellung, durch das aufsteigende Wasser getragen, in eine hochgehobene Stellung überführt werden. Infolge des Eigengewichtes der hohlen Tauchwand taucht diese stets teilweise in die Wasseroberfläche ein und verhindert so wirkungsvoll, dass die zugeführten, auf der Wasseroberfläche schwimmenden Festkörper das Becken verlassen können. Es sind auch schwimmende Tauchwände bekannt, deren Innenraum ausgeschäumt ist.

Es sind auch feste Tauchwände bekannt, die entweder seitlich an den Wänden des Bauwerkes oder an der Decke befestigt sind. Diese Tauchwände sind erst wirksam, wenn das Niveau des Wassers im Becken die Tauchwand erreicht hat. Dies im Gegensatz zu den schwimmenden Tauchwänden, die der Wasseroberfläche im Bereich vor Erreichen der Überlaufkante und während des Überlaufens folgen können.

Bei den bisher bekannten schwimmenden Tauchwänden wurden sehr grosse Anstrengungen unternommen, um deren absolute Dichtigkeit zu gewährleisten. Dies hatte zur Folge, dass alle Schweissnähte, Verbindungen etc. sowie die Befestigungen mit Schwenkarmen oder Führungen absolut luft- und wasserdicht hergestellt werden mussten, um den Zutritt von Wasser zu verhindern. Aus den gleichen Gründen wurden die Hohlräume der Tauchwände häufig ausgefüllt, um auf diese Weise den Zutritt von Wasser ins Innere zu verhindern. Diese Bemühungen sind mit hohen Fertigungskosten verbunden.

Die Aufgabe der vorliegenden Erfindung besteht nun darin, eine Tauchwand zu schaffen, die kostengünstig herstellbar ist und eine hohe Funktionsfähigkeit ohne Wartung über deren gesamte Lebensdauer gewährleistet.

Gelöst wird diese Aufgabe durch eine schwimmende Tauchwand gemäss den Merkmalen des Patentanspruches 1.

Eine nach dem Prinzip der Tauchglocke ausgebildete, d.h. unten offene Tauchwand lässt sich mit geringem Aufwand und kostengünstig herstellen, da einerseits weniger Material für deren Herstellung nötig ist und andererseits sämtliche notwendigen Schweissnähte und Verbindungen stets von innen und von aussen zugänglich sind. Durch das geringere Gewicht ist die Eintauchtiefe ebenfalls geringer und kann durch Verlängerung einer der beiden eintauchenden Seitenwände oder durch Gewichte, falls notwendig, kompensiert werden. Der die Tauchwand bildende Schwimmkörper kann, mit Ausnahme der stirnseitigen Wände, aus einem einzigen Blech durch Biegen und/oder Abkanten oder aus Kunststoff erzeugt werden.

Nebst der reinen Funktion als Rückhaltemittel von aufschwimmenden Festkörpern oder spezifisch leichteren Flüssigkeiten kann bei entsprechender Formgebung der Hohlraum in der Tauchwand zur Aufnahme von zurückgehaltenen Verunreinigungen dienen. Diese fallen nach Beendigung des Regenereignisses zurück ins Becken.

Die Tauchwand kann sowohl direkt an einer Schwenkachse angelenkt als auch an einem oder mehreren Schwenkarmen oder auch an Vertikalführungen befestigt sein, um von der abgesenkten in eine hochgehobene Stellung an vorbestimmter Stelle geführt zu werden.

Anhand illustrierter Ausführungsbeispiele aus dem Gebiet der Regenwasseranlagen wird die Erfindung näher erläutert.

Selbstverständlich können die erfindungsgemässen Tauchwände auch in anderen Becken oder Behältern zum Zurückhalten von auf der Oberfläche schwimmenden Verunreinigungen oder spezifisch leichteren Flüssigkeiten eingesetzt werden. Es zeigen:
- Figur 1: eine schematische Darstellung einer mittels eines Schwenkarmes an der Decke eines Regenüberlaufbeckens angelenkten Tauchwand,
- Figuren 2 bis 4: je einen Querschnitt durch weitere Ausführungsformen von Tauchwänden mit unterschiedlichen Führungen und Querschnittsformen,
- Figur 5: einen Querschnitt durch ein Regenüberlaufbecken mit einer schwenkbaren, mit ihrer Unterkante an der Überfallwand anliegenden Tauchwand,
- Figur 6: einen Querschnitt durch ein Regenüberlaufbecken mit einer seitlich an der Tauchwand befestigten Rückhaltewand,
- Figur 7: einen Querschnitt durch ein Rückhaltebecken mit einer an einem Parallelogramm befestigten unten gegen die Überfallwand gerichteten Tauchwand,
- Figur 8: einen Teilquerschnitt durch ein Rückhaltebecken mit einer schwenkbaren Tauchwand, deren untere Öffnung schräg nach unten gerichtet ist,
- Figuren 9 bis 11: je einen Querschnitt durch eine um eine horizontale Achse schwenkbare Tauchwand mit Aufnahmekapazität für zurückgehaltene Festkörper,
- Figur 12: einen Querschnitt durch eine Tauchwand mit einem rohrförmigen Schwimmkörper.

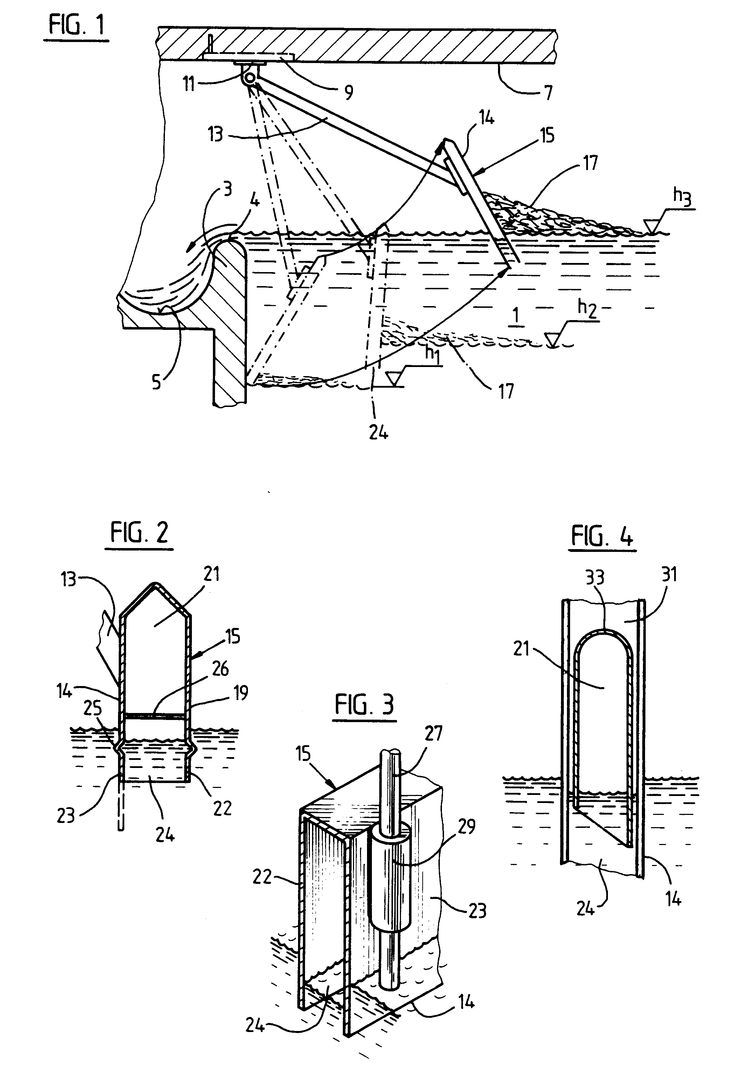

In Figur 1 ist ein Regenüberlauf- und Klärbecken 1 mit einer überfallwand 3 mit einer Überfallkante 4 und einem zum Auslauf führenden Kanal 5 dargestellt. An der Decke 7 ist an einer Ankerschiene 9 eine Lagerplatte 11 befestigt, an der ein Lenk- oder Tragarm 13 einer durch einen Schwimmkörper 14 gebildeten Tauchwand 15 schwenkbar angelenkt ist. Der Lenkarm 13 und der Schwimmkörper 14 sind im dargestellten Beispiel miteinander fest verbunden, z.B. verschweisst, verschraubt oder verklebt.

Im Regenüberlauf- oder Klärbecken 1 sind drei unterschiedliche Wasserstände h₁, h₂ und h₃ dargestellt.

Beim niedrigsten Wasserstand h₁, dieser kann auch noch tiefer gelegen sein als angegeben, liegt die Unterkante der Tauchwand 15 an der Überfallwand 3 an und schliesst einen Durchtritt von Verunreinigungen zwischen der Unterkante der Tauchwand 15 und der Überfallwand 3 beim Ansteigen des Wasserspiegels aus. Mit h₂ ist ein mittlerer Wasserstand dargestellt, bei dem die Tauchwand 15 bereits, von der eingeschlossenen Luft über dem aufsteigenden Wasserspiegel getragen, schwimmt und auf der Flüssigkeit aufschwimmende Verunreinigungen 17, die in Figur 1 von rechts angeschwemmt werden, zurückhält. Wenn der Wasserspiegel h₃ erreicht ist, so kann das dem Regenüberlaufbecken 1 zufliessende Wasser bereits über die Oberkante 4 der Überfallwand 3 in den Kanal 5 entweichen. Die zugeführten aufschwimmenden Verunreinigungen 17 werden von der nun noch höher liegenden Tauchwand 15 zurückgehalten und sogar teilweise an dieser hochgeschoben.

Sobald der Wasserzufluss abnimmt und die zufliessende Menge durch einen in Figur 1 nicht sichtbaren Ablauf der Kläranlage zugeführt werden kann, sinkt der Wasserspiegel im Klärbecken 1 und mit ihm die Tauchwand 15. Die vor der Tauchwand 15 zurückgehaltenen Verunreinigungen 17 bleiben folglich im Klärbecken 1 und können von dort später der Kläranlage zugeleitet werden.

Aus den Darstellungen der Tauchwand 15 in Figur 1 ist ersichtlich, dass der Schwimmkörper 14 der Tauchwand 15 an seinem unteren Ende offen ist und dass dort das Wasser um einen bestimmten Betrag, abhängig vom Gewicht der Tauchwand 15, in dieser aufsteigt, bis der Gegendruck der komprimierten Luft ausreicht, die Tauchwand 15 zu tragen. Das eindringende Wasser verlässt die Tauchwand 15, sobald diese zuflusseitig an der Überfallwand 3 anliegt und der Wasserspiegel unter die Unterkante der Tauchwand 15 absinkt.

In den Figuren 2 bis 12 werden mögliche Querschnitte für Tauchwände dargestellt, von denen einige nebst der reinen Rückhaltefunktion auch zusätzlich eine Speicherfunktion für zurückgehaltene aufschwimmende Verunreinigungen 17 oder andere aufschwimmende Medien aufweisen.

Figur 2 zeigt einen Querschnitt durch die einfachste Ausführungsform eines Schwimmkörpers 14, der aus einem gebogenen Blech 19 hergestellt ist, dessen Stirnflächen 21 mit einem entsprechend zugeschnittenen Blechabschnitt ausgefüllt und längs der Verbindung mit dem die Seitenwände 22,23 bildenden Blech 19 dicht verbunden sind. Zur Erhöhung der Festigkeit der beiden Seitenwände 22,23 können eine oder mehrere Sicken 25 eingeformt oder/und Stege 26 eingesetzt sein. Eine der beiden Seitenwände 22 oder 23 kann unten die Stirnwände 21 überragen und dient zur Vergrösserung der Rückhaltefläche (in Fig. 2 in gebrochenen Linien dargestellt). An der einen Seitenwand 22 greift der Lenkarm 13, der den Schwimmkörper 14 trägt, an.

In der Ausgestaltung der Tauchwand 15 gemäss Figur 3 ist die Querschnittsform des Schwimmkörpers 14 rechteckig und die Führung erfolgt durch eine oder mehrere mit dem Regenwasserbauwerk 1 verbundene Führungssäulen 27, welche hülsenförmige Tragelemente 29, die an der Seitenwand 23 angebracht sind, durchdringen. Anstelle der Führungssäule 27 kann der Schwimmkörper 14 auch mit dem letzten Glied einer oder mehrerer mehrteiligen Teleskopstange (keine Abb.) verbunden sein.

In Figur 4 ist eine Tauchwand 15 dargestellt, die von stirnseitig am Klärbecken 1 befestigten Führungsschienen 31 vertikal geführt wird. Anstelle kantiger Abbiegungen weist diese Ausführungsform des Schwimmkörpers 14 einen halbkreisförmigen oberen Abschluss 33 auf.

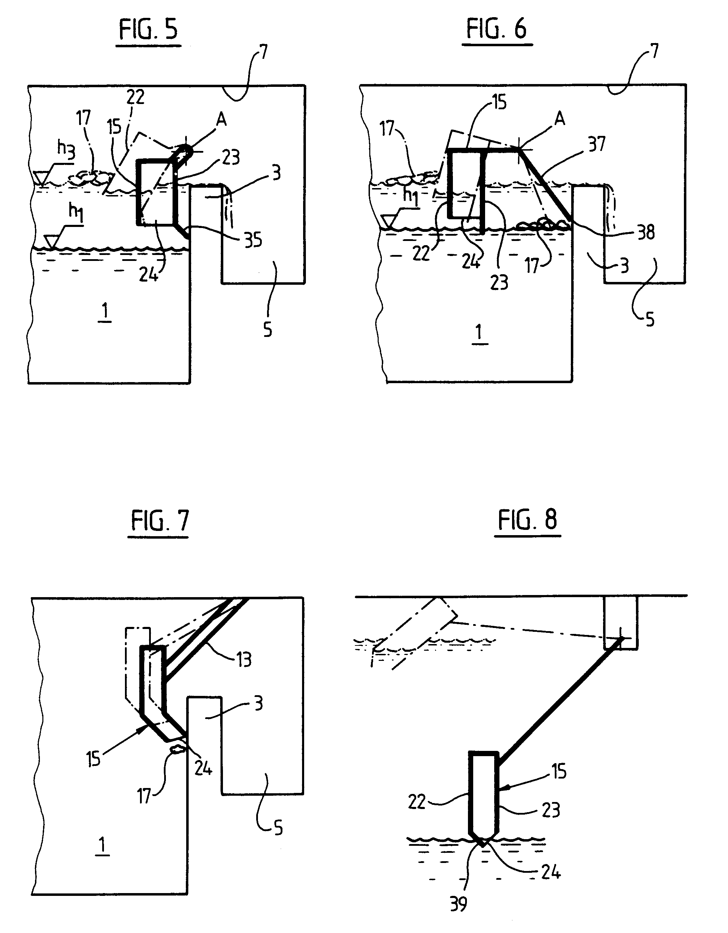

Figur 5 stellt eine Tauchwand 15 dar, die um eine feste Achse A schwenkbar ist. In der Ruhestellung liegt die vorzugsweise nach aussen umgebogene, d.h. von der untenliegenden Öffnung 24 des Schwimmkörpers 14 weggebogene untere Kante 35 der Seitenwand 23 an der Überfallwand 3 an (in fetten Linien dargestellt). Sobald der Wasserspiegel von beispielsweise h₁ auf h₃ ansteigt, schwenkt die Tauchwand 15 im Uhrzeigersinn in die in gebrochenen Linien dargestellte Lage. Durch diese Schwenkbewegung löst sich die umgebogene Kante 35 von der Überfallwand 3, und es kann Wasser zwischen der oberen Kante 35 und der Überfallwand 3 hindurch über die Oberkante der Überfallwand 3 abfliessen. Aufschwimmende Verunreinigungen 2 werden von der Seitenwand 22 zurückgehalten und am Durchtritt gehindert.

Eine ähnliche Ausbildung ist in Figur 6 dargestellt. Die Tauchwand 15 ist dort ebenfalls an einer Achse A schwenkbar gelagert und liegt in der Ausgangsstellung, d.h. wenn der Wasserspiegel h₁ die Tauchwand 15 noch nicht erreicht hat und folglich auch noch kein Wasser über die Überfallwand 3 fliesst, im wesentlichen vertikal (fette Linien). Seitlich der Tauchwand 15 ist in dieser Ausgestaltung der Erfindung eine Rückhaltewand 37 befestigt, welche mit der Tauchwand 15 verbunden in der Ruhestellung mit ihrer Unterkante 38 an der Innenseite der Überfallwand 3 anliegt. Sobald das Wasser soweit steigt, dass die Tauchwand 15 angehoben und dadurch im Uhrzeigersinn um die Schwenkachse A geschwenkt wird, löst sich die Rückhaltewand 37 von der Überfallwand 3 und erlaubt den Durchtritt von Wasser. Von der Rückhaltewand 37 während des Anstiegs des Wasserspiegels zurückgehaltene Verunreinigungen 17 werden zwischen der Rückhaltewand 37 und der rechts liegenden Seitenwand 23 des Schwimmkörpers 14 zurückgehalten und fallen nach Absinken des Wasserspiegels ins Becken 1 zurück. Jene Verunreinigungen 17, die erst nach Beginn der Schwenkbewegung der Tauchwand 15 angeschwemmt werden, werden von der links liegenden Seitenwand 22 der Tauchwand 15 daran gehindert, in den Kanal 5 zu gelangen, solange der Wasserspiegel die Oberkante der Tauchwand 15 nicht erreicht und eine Notentlastung eintritt.

Figur 7 zeigt eine Tauchwand 15, welche an einem Lenkarmpaar 13 befestigt ist und dadurch im wesentlichen eine translatorische Bewegung ausführend aufsteigt, wenn der Wasserspiegel im Becken 1 ansteigt. Damit zu Beginn des Anstieges des Wasserspiegels keine Verunreinigungen 17 zwischen der Tauchwand 15 und der Überfallwand 3 hindurchgelangen können, ist der untere Bereich der Tauchwand 15 gegen die überfallkante 3 hin umgebogen.

Aus Figur 8 ist ersichtlich, dass durch das unten gebogene Ende 39 der linken Seitenwand 22 der Zutritt von Luft in die Tauchwand 15 auch in maximal angehobener Stellung (gebrochene Linien) wirkungsvoll verhindert werden kann.

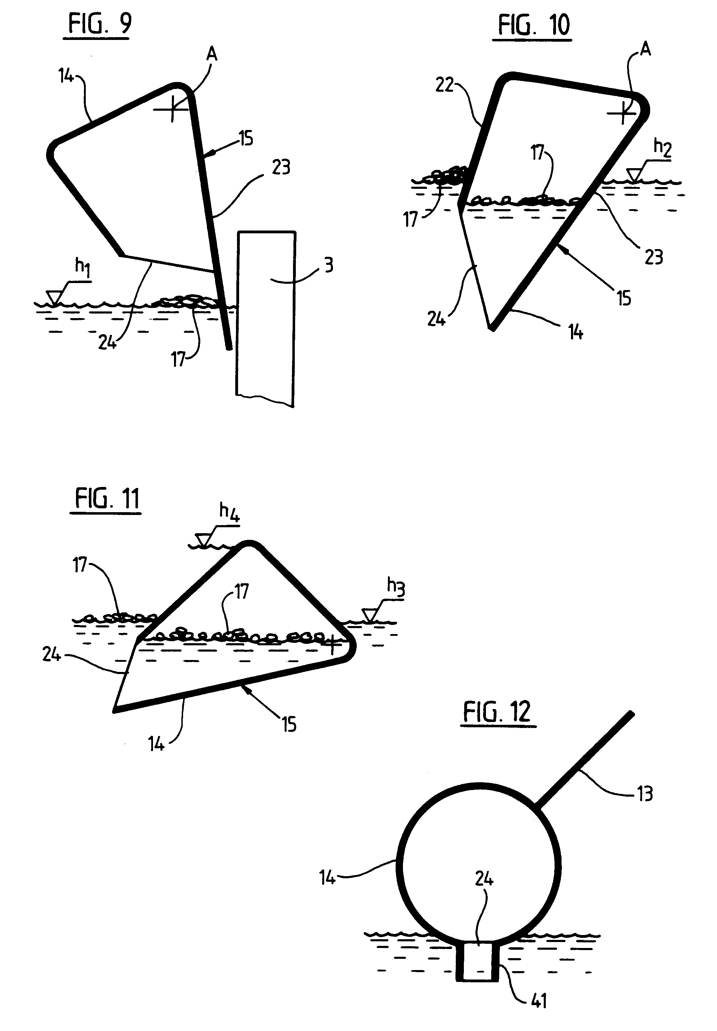

In den Figuren 9 bis 11 ist der Schwimmkörper 14 einer Tauchwand 15 schematisch dargestellt, welche mit steigendem Wasserspiegel um eine horizontale Achse A schwenkbar ist. In Ruhestellung, und solange der Wasserspiegel h₁ die Tauchwand 15 noch nicht erreicht hat, liegt die Unterkante des hinteren Schenkels 23 an der Überfallwand 3 an. Verunreinigungen 17, die auf der Oberfläche des Wasserspiegels schwimmen, werden von der rückwärtigen Seitenwand 23 zurückgehalten (Fig. 9). Steigt der Wasserspiegel auf das Niveau h₂, so wird die Tauchwand 15 im Uhrzeigersinn um die Achse A gedreht. Da nun der zulaufseitige Schenkel 22 der Tauchwand 15 ebenfalls in die Flüssigkeit eintaucht, werden neu herangeführte Verunreinigungen 17 an dieser zurückgehalten. Die bereits angeschwemmten und von der Seitenwand 23 aufgefangenen Verunreinigungen 17 befinden sich nun, schwimmend auf der Wasseroberfläche, innerhalb der Tauchwand 15 (Fig. 10). Steigt der Wasserspiegel auf die Höhe h₃ (Fig. 11), so bleiben vorerst die Verhältnisse bezüglich der Rückhaltung der aufschwimmenden Verunreinigungen 17 gleich. Bei Überschreiten der Höhe h₃ auf das Niveau h₄ werden nur gerade die dort vorhandenen aufschwimmenden Verunreinigungen 17 mitgerissen. Die zuvor von der Tauchwand 15 eingefangenen verbleiben im Innern und werden erst nach Rückgang des Wasserspiegels auf das Niveau h₁ freigegeben und in das Klärbecken 1 zurückgespült, von wo sie der Kläranlage zugeführt werden können. Die in den Figuren 9 bis 11 dargestellte Tauchwand erlaubt es folglich, einen grossen Teil der während des Anstiegs des Wasserspiegels auf die Maximalhöhe h₃ zurückgehaltenen Verunreinigungen 17 auch während des Notüberlaufs über die Kote h₄ zurückzuhalten.

Figur 12 zeigt einen rohrförmigen Schwimmkörper 14, der stirnseitig durch Wände 21 verschlossen ist. Im Bereich der Mantelfläche, die in die Flüssigkeit einzutauchen bestimmt ist, ist die axial verlaufende Öffnung 24 angebracht. Zur Erhöhung der Eintauchtiefe kann eine, oder es können beide benachbarten Mantelflächen radial nach aussen umgebogen sein und Rückhalteflächen 41 bilden.

## Patentansprüche

1. Schwimmende Tauchwand (15) für Regenüberlauf- und Klärbecken sowie Regenentlastungsanlagen und Kanäle (1) zum Rückhalten von auf der Flüssigkeitsoberfläche aufschwimmenden festen oder flüssigen Verunreinigungen (17), mit mindestens einem parallel zur Flüssigkeitsoberfläche verlaufenden, die Tauchwand (15) bildenden Schwimmkörper (14) und mit einem Führungsmittel (13,27,31,A) zum Führen der Tauchwand (15) zwischen einer abgesenkten und einer aufschwimmenden Stellung, dadurch gekennzeichnet, dass der Schwimmkörper (14) als Hohlkörper ausgebildet ist und an seiner unten liegenden Kante eine mit dem Innern verbundene und in die Flüssigkeit einzutauchen bestimmte Öffnung (24) aufweist.

2. Tauchwand nach Anspruch 1, dadurch gekennzeichnet, dass der Schwimmkörper (14) aus Seitenwänden (22,23) und dicht mit den Seitenwänden (22,23) verbundenen Stirnwänden (21) sowie einem oberen die Seitenwände (22,23) und die Stirnwände (21) verbindenden Abschluss (33) besteht.

3. Tauchwand nach einem der Ansprüche 1 oder 2, dadurch gekennzeichnet, dass eine der beiden Seitenwände (22,23) die übrigen Wände unten überragt.

4. Tauchwand nach Anspruch 3, dadurch gekennzeichnet, dass eine oder beide Seitenwände (22,23) im Bereich der Unterkante (35) umgebogen sind.

5. Tauchwand nach Anspruch 1, dadurch gekennzeichnet, dass der Schwimmkörper (14) aus einem Rohr besteht, das stirnseitig dicht verschlossen ist, und an dessen in die Flüssigkeit einzutauchen bestimmten Mantelabschnitt eine oder mehrere Öffnungen (24) angebracht sind.

6. Tauchwand nach Anspruch 5, dadurch gekennzeichnet, dass am eintauchenden Mantelabschnitt mit mindestens einer Öffnung (24) eine im wesentlichen radial nach unten abstehende Rückhaltefläche (41) ausgebildet ist.

7. Tauchwand nach einem der Ansprüche 1 bis 6, dadurch gekennzeichnet, dass der Schwimmkörper (14) an einem oder mehreren Lenkarmen (13) angelenkt, an Säulen (27) mittels Hülsen (29) an teleskopisch ausgebildeten Rohren geführt, um eine Achse (A) schwenkbar und/oder in stirnseitig an den Beckenwänden befestigten Schienen (31) zwischen einer abgesenkten Ruhestellung und einer angehobenen Arbeitsstellung bewegbar ist.

8. Tauchwand nach einem der Ansprüche 3 bis 7, dadurch gekennzeichnet, dass die zuflusseitige Seitenwand (22) bei maximal durch das Wasser im Becken (1) angehobenem Schwimmkörper (14) mindestens teilweise unter der Wasseroberfläche (h₃) zu liegen kommt.

9. Tauchwand nach einem der Ansprüche 1 oder 2, dadurch gekennzeichnet, dass der Schwimmkörper (14) an einer benachbart zur oberen Kante der Seitenwand (23) liegenden Achse (A) schwenkbar angelenkt ist, derart, dass bei abgesenktem Wasserspiegel (h₁) die Seitenwand (23) oder eine mit dieser verbundene Rückhaltewand (37) an der Überfallwand (3) anliegt und bei erhöhtem Wasserstand (h₂ - h₃) die Tauchwand (15) geschwenkt ist und zwischen letzterer und der Überfallwand (37) ein Abstand vorliegt.

10. Tauchwand nach einem der Ansprüche 1 bis 6, dadurch gekennzeichnet, dass der Schwimmkörper (14) um eine Achse (A) schwenkbar ist, welche Achse (A) benachbart zur abflusseitigen Seitenwand (23) liegt, derart, dass die Tauchwand (15) in Ruhestellung an der Überfallwand (3) anliegt und bei steigendem Wasserspiegel im Uhrzeigersinn geschwenkt wird.

11. Tauchwand nach Anspruch 10, dadurch gekennzeichnet, dass die abflusseitige Seitenwand (23) länger ist als die zuflusseitige (22), so dass während des Wasserspiegelanstieges die Verunreinigungen (17) anfänglich von der abflusseitigen Seitenwand (23) und erst im Verlauf der Schwenkbewegung von der zulaufseitigen Seitenwand (22) zurückgehalten werden.
